# EUROPEAN PATENT APPLICATION

(11) **EP 4 847 790 A1**
(43) Date of publication of application: **02.12.2026**
(21) Application number: 26181320.8
(22) Date of filing: 27.05.2026
(51) Int. Cl.: F16B 21/07

(54) **FASTENER DEVICES**

(30) Priority: 30.05.2025 US 202563814800 P; 19.05.2026 US 202619681554
(71) Applicant: HellermannTyton Yuhan Hoesa, Incheon 22011 (KR)
(72) Inventor: Chu, Jinmaeng, Siheung-si, Gyeonggi-do (KR); Yoon, Dongju, Siheung-si, Gyeonggi-do (KR)
(74) Representative: Hernandez, Yorck

(57) **Abstract**

A pin clip mount configured to couple a first component to a second component via a pin associated with the second component. The mount includes a unitary metal clip and a mount body. The clip includes a center portion and a pair of brackets extending from opposite ends of the center portion to define a U-shaped clip profile. A continuous openended pin slot extends through the brackets and the center portion, and a pin retainer portion is configured to engage the pin. The body includes a sidewall defining a bore configured to receive a portion of the pin along a longitudinal axis. A receiver portion is configured to receive the clip and intersects the bore such that the slot at least partially aligns with the bore to permit passage of the pin through the clip. This arrangement enables secure attachment to metal pins while permitting non-destructive removal and component reuse.

## Description

### INCORPORATION BY REFERENCE

This application claims the benefit of U.S. Application No. 63/814,800, filed May 30, 2025, the disclosure of which is incorporated herein by reference.

### BACKGROUND

The routing of bundles of elongated objects, such as electrical wire harnesses or fluid lines along a vehicle chassis, utilizes secure anchoring to a structural body. These structural bodies often include a mounting pin, such as a threaded stud mount or a weld stud mount that projects from a surface of the structural body to provide an anchoring point for a fastener device.

High-precision manufacturing sectors, such as automotive assembly, frequently utilize Plug-In, Push-On (PIPO) assembly processes for attaching components and bundles of components to structural bodies. In an example implementation of a PIPO process, a supplier delivers a prepared wire harness with a clip fastener device pre-attached to the wires. During assembly, an operator or robotic system aligns the clip fastener device with the mounting pins and pushes the clip fastener device onto the pins to lock them via an interference fit.

While conventional clip fastener devices often include a plastic housing with internal metal clip components, these arrangements are typically configured for single-use installation. Because the metal components are often integrated deep within the housing to provide a permanent grip, there is frequently no mechanism to disengage the clip from the mounting pin without causing damage to the clip fastener device or the metal clip. Furthermore, the forced removal of such clip fasteners can result in surface damage, such as scratches or score marks, to the pin. This damage can be difficult to repair and may compromise the structural integrity or surface finish of the pin, highlighting the need for a reworkable fastening solution.

In some applications, the mounting pin is formed of a relatively soft metal, such as aluminum, for example on aluminum die-cast or "giga-cast" body structures. In these environments, forced removal of conventional clips can readily score, gouge, or otherwise deform the pin surface, and such damage may be difficult or impractical to repair. Accordingly, there is a need for a fastening solution that provides high pull-out resistance while also enabling rework and non-destructive removal from soft-metal pins, including aluminum pins.

### SUMMARY

This document describes fastener devices configured to couple a first component to a second component via a mounting pin associated with the second component. In some aspects, the fastener devices are clip fasteners. In other aspects, the fastener devices are systems that include a fastener device and a clip fastener configured to be received into the fastener device. The disclosed fastener devices facilitate the secure and reworkable attachment of components to mounting pins.

The disclosed fastener devices utilize a unitary metal clip with a U-shaped profile and a continuous open-ended pin slot that intersects a bore in a mount body of the fastener device. This structural arrangement permits the unitary metal clip to be laterally translated within the mount body to engage or disengage the pin, even while the pin occupies the bore.

In one example implementation, a fastener device includes a unitary metal clip and a mount body. The unitary metal clip includes a center portion, a first bracket and a second bracket extending from opposite ends of the center portion to define a U-shaped clip profile, a continuous open-ended pin slot extending through the first bracket, the center portion, and the second bracket, and a pin retainer portion. The mount body includes a sidewall defining a bore that is configured to receive a portion (e.g., shaft) of a pin along a longitudinal axis and a receiver portion configured to receive the unitary metal clip. The receiver portion defines a channel that intersects the bore such that the continuous open-ended pin slot at least partially aligns with the bore to permit at least a portion of the pin to pass through the unitary metal clip.

In another example implementation, a fastener device includes a mount body and a unitary metal clip configured for translation within the mount body between a locked position and an unlocked position. The mount body includes an object support and defines a receiver portion that intersects a longitudinal bore. The unitary metal clip includes a U-shaped profile with a continuous open-ended pin slot and at least one cantilevered prong. In the locked position, the at least one cantilevered prong extends into the bore to engage a pin and inhibit movement in a retraction direction. In the unlocked position, the at least one cantilevered prong is disengaged from the pin to permit removal of the pin from the bore and/or removal of the unitary metal clip from the receiver portion while the pin occupies the bore. This arrangement can reduce waste and lower costs associated with assembly errors during the manufacture of vehicle bodies.

In some implementations, the unitary metal clip is user-actuatable to facilitate rework. For example, the unitary metal clip can be pushed into the receiver portion to establish the locked position and can be pulled (slid) laterally out of the receiver portion to establish the unlocked position. In the unlocked position, the unitary metal clip can be retracted at least partially outside of the mount body and/or removed from the mount body without destructive deformation of the unitary metal clip or the mount body, and without forced prying against the pin.

This Summary is provided to introduce simplified concepts of fastener devices, which are further described below in the Detailed Description and are illustrated in the Drawings. This Summary is not intended to identify all implementations of the fastener devices described in the Detailed Description and illustrated in the Drawings and is not intended to identify essential features of the claimed subject matter. Further, this Summary is not intended for use in determining the scope of the claimed subject matter.

### BRIEF DESCRIPTION OF THE DRAWINGS

The details of one or more implementations of fastener devices are described with reference to the following Drawings.
FIG. 1 is a schematic representation of an example environment in which a fastener device can be implemented.
FIG. 2 is an exploded isometric view of a pin clip mount fastener device illustrating the alignment between a mount body, a unitary metal clip, and a pin along a longitudinal axis.
FIG. 3 is a side view of the pin clip mount showing the unitary metal clip engaged with the pin and the mount body supporting objects.
FIG. 4 includes detail views (A) and (B), which provide front and rear isometric perspectives of the unitary metal clip to illustrate the continuous open-ended pin slot and the pin retainer portion.
FIG. 5 includes assembly views (A) and (B), which provide first and second underside perspectives of the unitary metal clip laterally translated into a receiver portion of the mount body.
FIG. 6 is an assembly view that provides a top perspective of the unitary metal clip laterally translated into a receiver portion of the mount body.
FIG. 7 is a detailed section view illustrating the interlocking relationship between a lock portion of the unitary metal clip and a corresponding feature within the mount body.

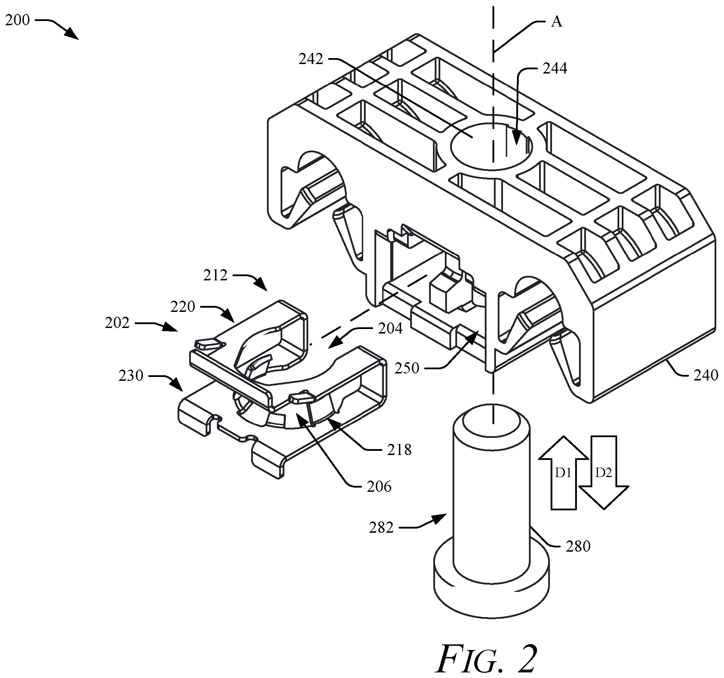

In the Detailed Description, the first digit(s) of a reference character (e.g., call-out number) may correlate with the first figure number in which the reference character is labeled. For example, reference characters that start with a "2" (e.g., a first bracket 220, second bracket 230) may represent details first called out with respect to FIG. 2. Further, the same reference characters in different Drawings may identify the same or similar features, elements, and/or parts.

### DETAILED DESCRIPTION

The lack of fastener devices configured for non-destructive removal presents challenges during assembly rework or maintenance. If a fixing is misaligned or incorrectly installed, it may be difficult to remove the fastener device without breaking the metal clip, a connector portion of the fastener device, or the fastener device itself. This can prevent the reuse of components and result in the loss of hardware during the assembly process. Consequently, a need exists for a fastening solution that allows for secure attachment to mounting pins while enabling non-destructive removal and rework.

### Overview

The present disclosure relates to fastener devices, such as pin clip mounts, which facilitate secure and reworkable attachment of components to mounting pins. By distributing pressure via linear contact points and providing a flexible bending geometry, the disclosed fastener devices achieve high pull-out resistance while minimizing surface damage to the mounting pin during detachment. The fastener devices address the technical challenges of conventional clip fastener devices, which may cause damage to the mounting pin during removal. Through the integration of prong geometry and a flexible bending structure, the unitary metal clip can be retracted using a tool to preserve the structural integrity of the assembly. This configuration enables correction of assembly errors and the reuse of hardware without compromising the surface finish of the mounting pin.

In some conventional arrangements, a clip pawl or latch engages the pin at a curved or point-like contact region, which can concentrate contact stress and increase the likelihood of surface marking, particularly on soft-metal pins. In contrast, the pin retainer portion described herein can include one or more cantilevered prongs that define a substantially straight-line contact edge to distribute engagement forces along a linear segment of the pin surface, thereby reducing localized stress concentrations during installation, retention, and rework.

### General Technical Environment

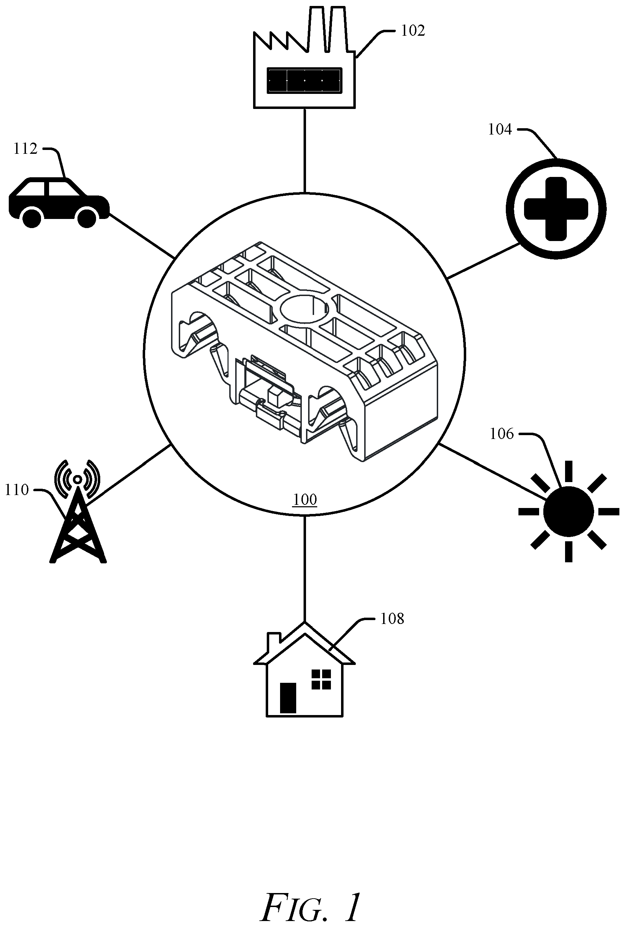

FIG. 1 is a schematic representation of a fastener device 100 configured to couple a first component to a second component via a mounting pin associated with the second component. As discussed herein, the fastener device 100 may have particular application in the transportation markets 112 (e.g., for the routing of bundles during the assembly of a vehicle). While this disclosure, including the Drawings, references these markets, the fastener device 100 may have application in other markets, including but not limited to industrial and manufacturing markets 102, healthcare markets 104, energy and utility markets 106, consumer and commercial markets 108, and/or telecommunications and data infrastructure markets 110.

The industrial and manufacturing markets 102 include industrial automation and equipment, control panels, machine building, machinery, electrical enclosures, material handling systems (e.g., conveyors), cooling systems, heavy equipment (e.g., construction and mining machinery), agricultural technology (e.g., farming equipment), chemical (e.g., chemical processing equipment), robotics (e.g., automated robotic systems), original equipment manufacturers (OEMs), mechanical components, and mechanical systems. The healthcare markets 104 include medical equipment and technology, and dental equipment and technology. The energy and utility markets 106 include renewable energy systems (e.g., solar panels, solar arrays, wind turbines, hydroelectric generators), power generation and distribution, industrial lighting, and commercial lighting. The energy and utility markets 106 also include photovoltaic systems that include one or more panels (e.g., solar panels) of photovoltaic cells mounted on a support structure where the electrical output of the solar panels is transferred to the electrical grid or an electrical storage device (e.g., battery) through one or more electrical cables (photovoltaic cables). The consumer and commercial markets 108 include appliances (e.g., home and commercial appliances), heating, ventilation, and air conditioning (HVAC), and consumer electronic devices. The telecommunications and data infrastructure markets 110 include telecommunications (e.g., general telecom services), communications (e.g., communication systems and equipment), internet service providers (ISPs), cable television companies (CATV), infrastructure for data storage and processing (e.g., data centers), broadband (e.g., broadband internet services), and datacom (e.g., data communications equipment). The transportation markets 112 include manufacturing and components for vehicles, trucks, heavy equipment, automobiles, rail conveyances (e.g., trains), marine craft (e.g., ships, boats), aircraft, and aerospace.

### Fastener Devices

Aspects of fastener devices are illustrated in FIGS. 2-6. The fastener devices are configured to couple a first component to a second component via a mounting pin associated with the second component.

The first component may be an object. As used herein, the term "object" is used to refer to all types and forms of objects, including, but not limited to hydraulic lines (e.g., fuel lines, brake lines), cables, wires, wire harnesses, pneumatic lines, hoses, optical fiber, textiles, plastics, pipes, tubing, conduits, and bundles of one or more of the same. The second component may be a support structure. As used herein, the term "support structure" is used to refer to all types and forms of structures, including, but not limited to vehicle chassis, machines, cabinets, housings, frames, frame rails, enclosures, panels, support beams, cable routing channels, conveyor channel assemblies, and the like.

In the implementation illustrated in FIGS. 2-6, the fastener device is a pin clip mount 200 that is configured for non-destructive removal from a mounting pin to facilitate rework and component reuse. The pin clip mount 200 includes a retainer clip (e.g., unitary metal clip 202) and a mount body 240.

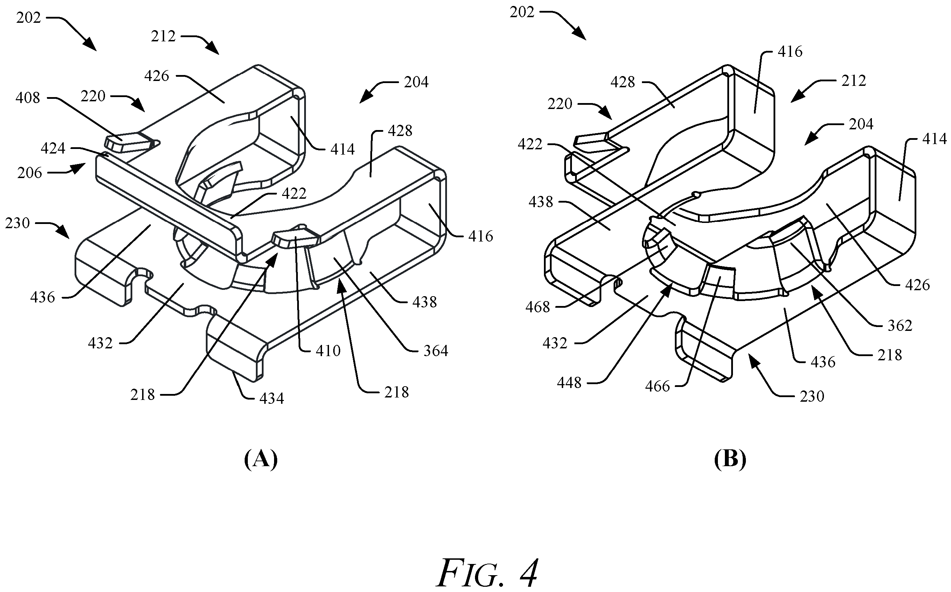

The unitary metal clip 202 includes a center portion 212, a first bracket 220, and a second bracket 230. The first bracket 220 and the second bracket 230 extend from opposite ends of the center portion 212 to define a U-shaped clip profile. The unitary metal clip 202 defines a continuous open-ended pin slot 204 that extends through the first bracket 220, the center portion 212, and the second bracket 230. In some implementations, such as illustrated in FIG. 4, the first bracket 220 includes a first arm 426 and a second arm 428 that are joined at a first end portion 422 to define a U-shaped bracket profile, while the second bracket 230 includes a first arm 436 and a second arm 438 joined at a second end portion 432 to define another U-shaped bracket profile. This nested U-shaped geometry provides spring tension, which permits the first bracket 220 and the second bracket 230 to exert outward pressure against the internal surfaces of the receiver portion 250 to stabilize the unitary metal clip 202 within the mount body 240. These first bracket arms and the second bracket arms define lateral boundaries of the continuous open-ended pin slot 204.

The center portion 212 is bifurcated into a first center portion 414 and a second center portion 416 to maintain the continuity of the continuous open-ended pin slot 204 from the first bracket 220 through to the second bracket 230. The first center portion 414 connects the first arm 426 of the first bracket 220 to the first arm 436 of the second bracket 230, while the second center portion 416 connects the second arm 428 of the first bracket 220 to the second arm 438 of the second bracket 230. At the distal ends of the brackets, the arms connect at the first end portion 422 and the second end portion 432, respectively. The unitary metal clip 202 is configured for positioning within the receiver portion 250 of the mount body 240 such that the continuous open-ended pin slot 204 aligns with the bore 244 to permit the pin 280 to extend through the unitary metal clip 202.

The unitary metal clip 202 includes a pin retainer portion 218 configured to engage the pin 280. In the implementation illustrated in FIGS. 2-6, the pin retainer portion 218 is positioned on the second bracket 230. In other implementations, the pin retainer portion 218 may be positioned on the first bracket 220, the second bracket 230, or both.

As used herein, the term "pin" refers to all types and forms of mounting members, such as a stud, a stud bolt, a mounting stud, a mounting pin, a bolt (e.g., an M5 bolt, an M6 bolt), an unthreaded stud, a plain aluminum pin, a casted boss, a threaded metal pin (e.g., with helical threads), or a weld stud mount. A shaft 282 of the pin 280 can be, in whole or in part, smooth (e.g., unthreaded) or non-smooth (e.g., including external threads, ridges, annular grooves, and the like). In some aspects, the pin 280 is a weld stud mount, such as a threaded or unthreaded fastener configured to be fused to a metal surface. In other aspects, the pin 280 is a threaded boss mount, such as an M5 bolt, an M6 bolt, or another threaded elongated fastener. A pin may include a head portion from which the shaft 282 extends.

The first bracket 220 includes a first distal end 424 opposite the center portion 212, and the second bracket 230 includes a second distal end 434 opposite the center portion 212. At least one of the first distal end 424 or the second distal end 434 can include one or more flange portions configured to limit translation of the unitary metal clip 202 into the receiver portion 250. A flange portion may also provide a purchase point for a tool during an installation or removal procedure, explained herein.

The unitary metal clip 202 is formed of a resilient material configured to permit the first bracket 220 and the second bracket 230 to exert a biasing force against the mount body 240. In some implementations, the unitary metal clip 202 is constructed from a single sheet or strip of unhardened steel material that is stamped and bent to form the U-shaped clip profile. Further processing (e.g., quenching and tempering) sets the U-shaped clip profile. Suitable metal materials for the unitary metal clip 202 include steel, spring steel, stainless steel, galvanized steel, zinc-plated steel, aluminum, and SK85 Japanese Industrial Standards (JIS) high-carbon tool steel. In this configuration, when the first distal end 424 of the first bracket 220 and the second distal end 434 of the second bracket 230 are compressed toward one another, the first bracket 220 and the second bracket 230 concentrate a structural load at the center portion 212. Upon release of the compression force, stored strain energy provides a restoring force that returns the first distal end 424 and the second distal end 434 to their original positions.

The structural arrangement and reworkability of the pin clip mount 200 are facilitated by the geometric configuration of the unitary metal clip 202. As illustrated in FIG. 4, the unitary metal clip 202 is formed from a single, continuous sheet of resilient material, such as steel. This material selection allows the unitary metal clip 202 to undergo elastic deformation during installation and removal cycles while minimizing permanent structural deformation.

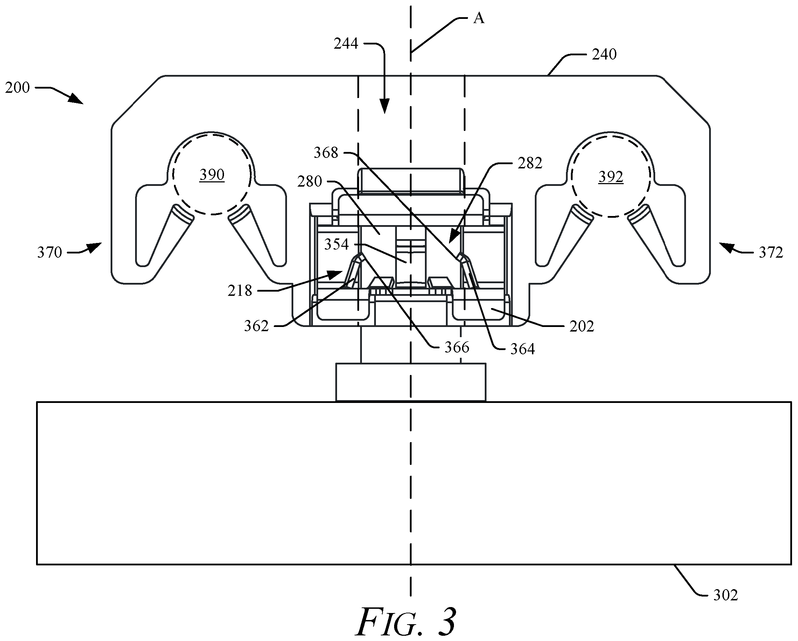

The pin retainer portion 218 of the pin clip mount 200 is configured to retain the pin 280 in the bore 244. In implementations, the pin retainer portion 218 is configured with at least one cantilevered prong that is angled to extend generally toward the longitudinal axis A. The at least one cantilevered prong can be configured as a linear contact member that includes a straight-line contact edge. For example, as illustrated in FIG. 3, the first cantilevered prong 362 includes straight-line contact edge 366 and the second cantilevered prong 364 includes straight-line contact edge 368. The straight-line contact edge is configured to distribute an engagement force across a linear segment of the shaft 282 of the pin 280 to minimize surface deformation and preserve the structural integrity of the pin. In some implementations, the pin retainer portion 218 includes a plurality of cantilevered prongs, such as a first cantilevered prong 362 and a second cantilevered prong 364, that are configured to engage the outer surface of the shaft 282 of the pin 280. The cantilevered prongs can extend from the first bracket 220, the second bracket 230, or both.

As illustrated in FIG. 3, the cantilevered prongs are angled toward the longitudinal axis A to permit the pin 280 to advance in the insertion direction D1 while engaging the pin 280 to inhibit movement in the retraction direction D2. This engagement effectively secures the mount body 240 relative to the pin 280. When the pin 280 advances in the insertion direction D1, the cantilevered prongs are configured to elastically deflect away from a longitudinal axis A. When a force is applied in the retraction direction D2, the cantilevered prongs engage the shaft 282 of the pin 280 to inhibit movement. In some examples, the pin clip mount 200 is configured to withstand a pull-out force exceeding 160 kgf while maintaining an insertion force of less than 7 kgf.

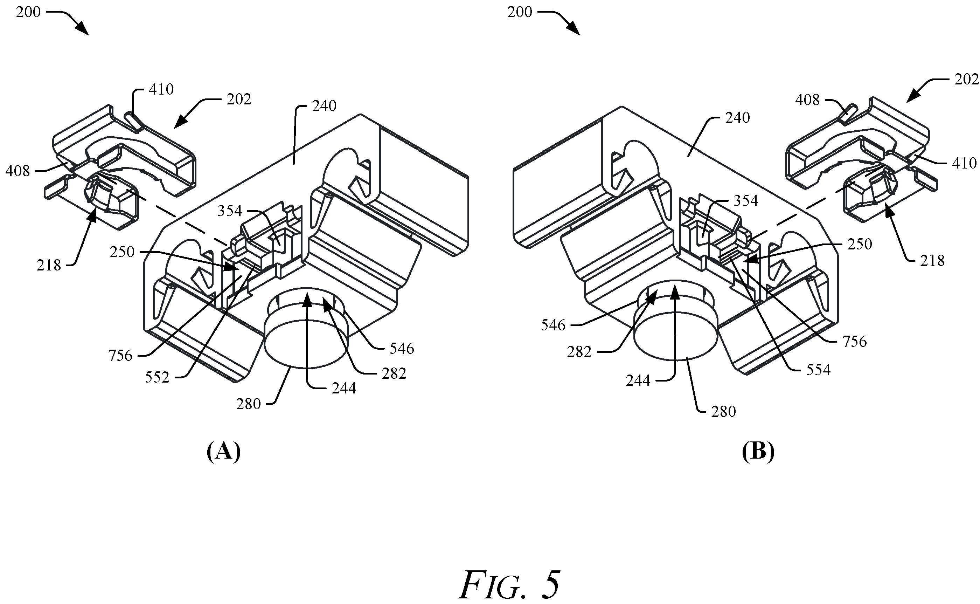

The mount body 240 is configured for mounting on the pin 280 and includes a sidewall 242 that defines a longitudinal bore 244. As used herein, the term "bore" refers to a passageway sized and shaped to receive the pin 280 and/or a portion of the pin. A bore may be open ended or close ended. The bore 244 can extend completely through the mount body 240, through a portion of the mount body 240, or into the mount body 240. The bore 244 is configured to receive a portion (e.g., the shaft 282) of the pin 280 along the longitudinal axis A. The bore 244 defines the insertion direction D1 for the pin 280, with the retraction direction D2 oriented in a direction opposite to the insertion direction D1. As illustrated in FIG. 5, the first end of the bore 244 terminates at an opening 546 configured to receive a tip of the pin 280 and the shaft 282 of the pin 280 therethrough. The opening 546 can include a beveled or funnel-shaped lead-in to facilitate self-centering of the pin 280 during insertion.

The mount body 240 can be fabricated of suitable materials through a suitable fabrication technique. Suitable fabrication techniques can include one or more of an injection-molding process, an insert molding process, an overmolding process, an additive manufacturing process (e.g., a fused deposition modeling (FDM) process, a three-dimensional (3D) printing process), or another suitable process. Suitable materials can include, but are not limited to, a metal, a ceramic, a polymeric material, or a composite. Suitable polymeric materials can include one or more of polyamide (PA), polypropylene (PP), polyethylene (PE), polyphenylene sulfide (PPS), polyether ether ketone (PEEK), polyaryletherketone (PAEK), ethylene tetrafluoroethylene (ETFE), polyacetal (POM), polybutylene terephthalate (PBT), ultraviolet stabilized polyacetal (POMUV), urethane dimethacrylate (UDMA), acrylonitrile styrene acrylate (ASA), polyester (PET), polyvinyl chloride (PVC), cross-linked thermoplastics, partially cross-linked thermoplastics, higher-temperature resins, ultraviolet (UV) resistant resins, other thermoplastic materials, and copolymers, blends, or alloys thereof, as well as fiber reinforced materials. A suitable polymeric material can include one or more additives, such as heat stabilizers, impact modifiers, UV stabilizers, flame retardants, or colorants.

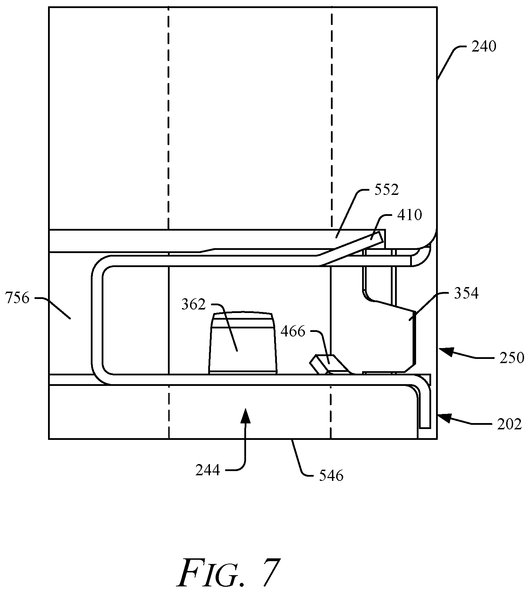

The mount body 240 further includes a receiver portion 250 configured to receive the unitary metal clip 202. As illustrated in the alignment between the components in FIG. 2, the receiver portion 250 intersects the bore 244 such that the continuous open-ended pin slot 204 at least partially aligns with the bore 244, as further illustrated in FIG. 7. This structural arrangement permits the portion (e.g., shaft 282) of the pin 280 to pass through the unitary metal clip 202 when the pin 280 occupies the bore 244 and the unitary metal clip 202 occupies the receiver portion 250.

The unitary metal clip 202 is configured for translation within the receiver portion 250 between a locked position and an unlocked position. In the locked position, such as illustrated in FIGS. 1, 3, and 7, the pin retainer portion 218 extends into the bore 244 to engage the pin 280, thereby inhibiting movement of the mount body 240 relative to the pin 280 along the longitudinal axis A in the retraction direction D2. In the unlocked position, such as illustrated in FIGS. 2, 4, and 5, the pin retainer portion 218 is disengaged from the pin 280 to permit removal of the pin 280 from the bore 244 or translation of the unitary metal clip 202 out of the receiver portion 250 while the pin 280 occupies the bore 244.

The continuous open-ended pin slot 204 is configured to permit the unitary metal clip 202 to be laterally translated into and/or out of the receiver portion 250 without interference from the pin 280 (e.g., while the shaft 282 of the pin 280 occupies the bore 244). This structural arrangement allows the fastener device 200 to transition between a locked state and an unlocked state independently of the installation status of the pin 280, preserves the surface finish of the pin 280, and maintains the structural integrity of the mount body 240 during maintenance or assembly rework.

The unitary metal clip 202 is configured for displacement from the receiver portion 250 while the pin 280 occupies the bore 244, enabling non-destructive removal and rework of the assembly. In other implementations, the unitary metal clip 202 can remain in the unlocked state within the receiver portion 250 and the pin 280 can be withdrawn from the bore 244.

The mount body 240 can include at least one object support (e.g., object support 370, object support 372) that is configured to support at least one object. In some implementations, the object support includes one or more of a clamp, a clip, a mount, a routing clamp, a bracket clamp, a saddle mount, a cradle, or a ratchet P-clamp. The object support may define a cable tie passageway configured to receive a cable tie or other strapping material to cinch the at least one object (e.g., object 390, object 392) to the pin clip mount 200. In other implementations, the object support features a curved geometry, such as a J-shaped or elliptical profile, to provide structural support for a bundle of objects. The object support may optionally include one or more cable ties to bundle the at least one object to the mount body 240. In some instances, the object support may be omitted.

FIG. 3 is a side view of the pin clip mount 200 in an assembled state, which shows the fastener device 200 secured to the second component (support structure 302) via the pin 280. In FIGS. 2 and 5, the support structure is hidden from view. The mount body 240 includes the first object support 370 and the second object support 372 configured to support a plurality of objects (e.g., object 390, object 392). The object(s) are the "first" component. In this implementation, the first object support 370 and the second object support 372 are configured as J-hook retainers that each include a pair of opposing cantilever arms that extend from a base. The cantilever arms can include curved terminal portions that arc toward a longitudinal centerline of the object support to define an internal cavity for the object. The terminal portions may be beveled or radiused to define a lead-in throat that facilitates the elastic deflection of the cantilever arms during the insertion of the object. Upon the seating of the object within the internal cavity, the cantilever arms are configured to return to a biased position to inhibit the removal of the object from the object support. In other implementations, the mount body 240 can include different object support geometries to accommodate various configurations of the objects 390.

The pin retainer portion 218 is positioned within the bore 244 such that the cantilevered prongs (e.g., cantilevered prong 362, cantilevered prong 364) engage the shaft 282 of the pin 280. This engagement is configured to permit unidirectional movement of the pin 280 through the bore 244 in the insertion direction D1 while resisting movement in the retraction direction D2. As the pin 280 advances in the insertion direction D1, the cantilevered prongs elastically deflect to permit passage. The pin retainer portion 218 is further configured such that the straight-line contact edges of the cantilevered prongs bite into the outer surface of the pin 280. This configuration inhibits movement of the pin 280 in the retraction direction D2 while enabling the mechanical load to be distributed linearly rather than at a single point of failure.

The receiver portion 250 further includes a stopper 354 configured to interface with the unitary metal clip 202 to limit translation and inhibit vibration. As illustrated, the U-shaped clip profile of the unitary metal clip 202 permits the first bracket 220 and the second bracket 230 to exert a biasing force against the internal walls of the mount body 240, which facilitates a secure fit within the assembly. In some implementations, the pin clip mount 200 includes the stopper 354, while in other implementations, the stopper 354 may be omitted. The open end of the continuous open-ended pin slot 204 at the second bracket 230 defines a stopper notch 448 between a first flange 466 and a second flange 468. The stopper notch 448 is configured to receive the stopper 354 located within the receiver portion 250. This engagement limits the depth of translation, facilitates self-centering of the unitary metal clip 202, and maintains structural stability in high-vibration environments. The stopper 354 may include a rigid protrusion that, when engaged with the first flange 466 and the second flange 468, limits the depth of translation of the unitary metal clip 202 and inhibits lateral movement of the unitary metal clip 202.

The unitary metal clip 202 is positioned within the receiver portion 250 of the mount body 240 such that the continuous open-ended pin slot 204 aligns with the bore 244 to permit the pin 280 to extend through the unitary metal clip 202. The U-shaped clip profile of the unitary metal clip 202 permits the first bracket 220 and the second bracket 230 to provide spring tension against the internal walls of the mount body 240 to stabilize the unitary metal clip 202 within the receiver portion 250.

The unitary metal clip 202 includes a lock portion 206 configured to releasably fix the unitary metal clip 202 within the mount body 240. As illustrated in FIGS. 4-6, the lock portion 206 includes at least one locking flange (e.g., locking flange 408, locking flange 410) or other slanted profile that is configured to interface with a corresponding groove (e.g., first groove 552, second groove 554) or latching shoulder that is defined within the receiver portion of the mount body 240 to releasably fix the unitary metal clip 202 in the locked position. The first groove 552 may be located opposite the second groove 554. When the unitary metal clip 202 is laterally translated into the receiver portion 250, the locking flange travels along an internal guide path until it seats within the corresponding groove, thereby defining the locked position. In some implementations, the lock portion 206 may be omitted.

With respect to FIG. 4, the unitary metal clip 202 is illustrated in detail to show a geometric configuration that facilitates non-destructive removal and reuse. The unitary metal clip 202 can be formed as a single, continuous component, such as from a stamped sheet of spring steel, which includes the first bracket 220 and the second bracket 230, which extend from the center portion 212. As shown in the front isometric view (A) and the rear isometric view (B), the brackets and the center portion 212 define a U-shaped clip profile. This U-shaped clip profile may include a nested arrangement of the U-shaped first bracket profile and the U-shaped second bracket profile. These profiles are spaced apart to define the lateral boundaries of the continuous open-ended pin slot 204. The arms of each bracket connect at the first end portion 422 and the second end portion 432, respectively. The U-shaped clip profile may further include the continuous open-ended pin slot 204 that extends through the first bracket 220, the center portion 212, and the second bracket 230.

The configuration of the pin clip mount 200 permits rework through the interaction between the continuous open-ended pin slot 204 and the receiver portion 250. Because the continuous open-ended pin slot 204 extends through both brackets (e.g., first bracket 220, second bracket 230) and the center portion 212, the unitary metal clip 202 can be translated laterally relative to the longitudinal axis A while the pin 280 occupies the bore 244. An operator applies a tool (e.g., pliers, a screwdriver, a pry tool) to the first end portion 422 and/or the second end portion 432 to apply a bend force to initiate removal. This force disengages the locking flange 410 from the groove 552 and shifts the cantilevered prongs away from the pin 280. The tool moves the unitary metal clip 202 to the unlocked position, permitting the mount body 240 to be removed from the pin 280.

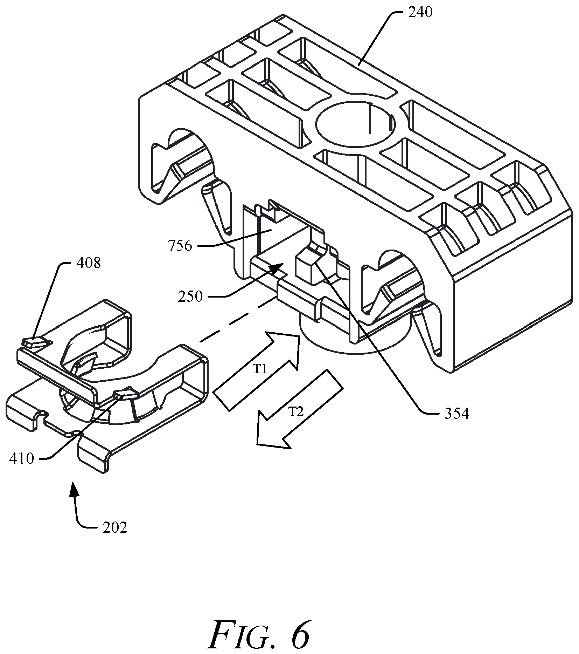

FIG. 5 includes assembly views (A) and (B) that provide first and second underside perspectives of the unitary metal clip 202 being laterally translated into the receiver portion 250 of the mount body 240. FIG. 6 is an assembly view that provides a top perspective of the unitary metal clip 202 being laterally translated into the receiver portion 250 of the mount body 240. The receiver portion 250 defines a channel 756 that intersects the bore 244. The unitary metal clip 202 is aligned such that the continuous open-ended pin slot 204 can receive the pin 280, permitting the unitary metal clip 202 to be moved into the receiver portion 250 along an insertion translation direction (T1) while the pin 280 occupies the bore 244. The lock portion 206, specifically the locking flanges (locking flange 408, locking flange 410), is configured to travel along the channel 756 defined in the receiver portion 250 of the mount body 240 until it reaches a corresponding groove (e.g., groove 552, groove 554) to fix the unitary metal clip 202 in a locked position. To facilitate rework or removal, the unitary metal clip 202 is configured to be laterally translated in a retraction translation direction T2, opposite to T1, to disengage the pin retainer portion 218 from the pin 280. This structural configuration facilitates the unitary metal clip 202 being non-destructively moved between the locked position and the unlocked position via translation along axes T1 and T2 to permit rework and removal without damaging the pin 280, the mount body 240, or the unitary metal clip 202.

The interlocking relationship between the locking flanges and the mount body 240 facilitates the releasable fixation of the unitary metal clip 202 to maintain engagement with the pin 280. As illustrated in FIG. 7, the locking flange 410 of the lock portion 206 is seated within the groove 552 defined by the receiver portion 250. This mechanical engagement inhibits unintentional displacement of the unitary metal clip 202 along the translation axis while the cantilevered prong 362 extends into the bore 244. The stopper 354 limits the translation of the clip to inhibit vibration or over-insertion. This configuration defines the locked position, which can be disengaged by applying a force to the unitary metal clip 202 via a tool. For example, a tool may be applied to the U-shaped clip profile to move the unitary metal clip 202 toward the unlocked position. This translation disengages the lock portion 206 from the groove 552 and disengages the cantilevered prong 362 from the shaft 282, permitting the pin clip mount 200 to be removed from the pin 280 while minimizing surface damage to the pin 280.

### Examples

Some additional examples of fastener devices are described in the following Examples.

Example 1. A pin clip mount comprises a unitary metal clip and a mount body configured to couple a first component to a second component via a pin associated with the second component. The unitary metal clip includes a center portion. A first bracket and a second bracket extend from opposite ends of the center portion to define a U-shaped clip profile. A continuous open-ended pin slot extends through the first bracket, the center portion, and the second bracket. The unitary metal clip further includes a pin retainer portion configured to engage the pin. The mount body includes a sidewall defining a bore configured to receive a portion of the pin along a longitudinal axis. The mount body also includes a receiver portion configured to receive the unitary metal clip. The receiver portion intersects the bore such that the continuous open-ended pin slot at least partially aligns with the bore to permit the pin to pass through the unitary metal clip.

Example 2. The pin clip mount of any preceding Example where the center portion includes a first center portion spaced apart from a second center portion. The first center portion connects a first arm of the first bracket to a first arm of the second bracket. The second center portion connects a second arm of the first bracket to a second arm of the second bracket.

Example 3. The pin clip mount of any preceding Example where the continuous open-ended pin slot is defined between the first center portion and the second center portion. The slot is further defined between the first and second arms of the first bracket and between the first and second arms of the second bracket.

Example 4. The pin clip mount of any preceding Example where the first and second arms of the first bracket connect at a first end portion to form a U-shaped first bracket profile. The first and second arms of the second bracket connect at a second end portion to form a U-shaped second bracket profile. The unitary metal clip is configured such that a force applied to at least one of the first end portion or the second end portion disengages the pin retainer portion from the pin.

Example 5. The pin clip mount of any preceding Example where the continuous open-ended pin slot is configured to receive the portion of the pin through the slot during an installation of the unitary metal clip into the receiver portion while the portion of the pin occupies the bore.

Example 6. The pin clip mount of any preceding Example where the unitary metal clip is configured to be laterally translated within the receiver portion between a locked position and an unlocked position. In the locked position, the pin retainer portion engages the pin to limit movement of the mount body relative to the pin. In the unlocked position, the pin retainer portion disengages the pin.

Example 7. The pin clip mount of any preceding Example where the pin is removable from the bore while the unitary metal clip is in the receiver portion when the unitary metal clip is in the unlocked position. Additionally, the unitary metal clip is removable from the receiver portion while the pin occupies the bore when the unitary metal clip is in the unlocked position.

Example 8. The pin clip mount of any preceding Example where the pin retainer portion is defined on the second bracket. The pin retainer portion is configured to engage the pin to inhibit withdrawal of the pin from the bore.

Example 9. The pin clip mount of any preceding Example where the pin retainer portion includes at least one cantilevered prong.

Example 10. The pin clip mount of any preceding Example where the bore defines a central longitudinal axis and the at least one cantilevered prong extends toward the central longitudinal axis.

Example 11. The pin clip mount of any preceding Example where the at least one cantilevered prong is configured to elastically deflect away from the central longitudinal axis in response to the pin advancing through the bore.

Example 12. The pin clip mount of any preceding Example where the pin is inserted into the bore in an insertion direction. The pin clip mount is configured such that the pin is retained within the bore against movement in a retraction direction opposite the insertion direction by engagement of the pin retainer portion with the pin.

Example 13. The pin clip mount of any preceding Example where the unitary metal clip further includes a lock portion configured to releasably fix the unitary metal clip within the receiver portion.

Example 14. The pin clip mount of any preceding Example where the lock portion includes at least one locking flange that extends from at least one of the first bracket or the second bracket.

Example 15. The pin clip mount of any preceding Example where the at least one locking flange extends from the first bracket.

Example 16. The pin clip mount of any preceding Example where the mount body defines at least one groove within the receiver portion configured to receive the locking flange. The locking flange is configured for retention within the groove to fix the unitary metal clip in a locked position in the receiver portion.

Example 17. The pin clip mount of any preceding Example where the continuous open-ended pin slot at the second bracket defines a slot. The slot is defined between a first flange and a second flange that extend from the second bracket. The receiver portion includes a stopper configured for receipt into the slot to limit translation of the unitary metal clip within the receiver portion.

Example 18. The pin clip mount of any preceding Example where a first end of the bore terminates at an opening configured to receive the pin through the opening.

Example 19. The pin clip mount of any preceding Example where the receiver portion defines a channel that intersects the bore.

Example 20. The pin clip mount of any preceding Example where the mount body further includes an object support configured to support the first component.

Example 21. The pin clip mount of any preceding Example where the unitary metal clip is formed of a single piece of stamped steel configured to exert a biasing force against the receiver portion.

Example 22. The pin clip mount of any preceding Example where the first bracket and the second bracket extend generally parallel to one another from the center portion to define the U-shaped clip profile.

Example 23. The pin clip mount of any preceding Example where the first bracket, the center portion, and the second bracket each comprise a pair of arms spaced apart by the continuous open-ended pin slot.

Example 24. The pin clip mount of any preceding Example where the mount body further comprises a guide rib positioned within the receiver portion to constrain the unitary metal clip during translation between the locked position and the unlocked position.

Example 25. The pin clip mount of any preceding Example where the at least one cantilevered prong comprises a straight-line contact edge. The straight-line contact edge is configured to distribute an engagement force across a linear segment of the pin to minimize surface deformation of the pin.

Example 26. The pin clip mount of any preceding Example where the pin clip mount is configured to withstand a pull-out force of at least 160 kgf while requiring an insertion force of less than 7 kgf.

Example 27. The pin clip mount of any preceding Example where the first arm and the second arm extend from opposite ends of the base portion to define a nested U-shaped clip profile.

Example 28. The pin clip mount of any preceding Example where the continuous open-ended pin slot at least partially aligns with the bore to permit the pin to pass through the unitary metal clip when the unitary metal clip is laterally translated within the receiver portion into a locked position, the unitary metal clip configured for lateral translation within the receiver portion out of the locked position to disengage the pin retainer portion from the pin while the pin occupies the bore.

Example 29. The pin clip mount of any preceding Example where the first bracket terminates at a first distal end and the second bracket terminates at a second distal end, and where the continuous open-ended pin slot extends through the first bracket, the center portion, and the second bracket to define an open end between the first distal end and the second distal end.

Example 30. The pin clip mount of any preceding Example, where the at least one cantilevered prong comprises a straight-line contact edge configured to distribute an engagement force across a linear segment of the pin.

Example 31. The pin clip mount of any preceding Example, where a first end of the bore terminates at an opening configured to receive the pin therethrough and the receiver portion defines a channel that intersects the bore.

Example 32. A pin clip mount configured to secure a component to a pin, the pin clip mount comprising: a mount body that includes a bore configured to receive the pin along a longitudinal axis and a receiver portion that intersects the bore; and a retainer clip positioned within the receiver portion and comprising a continuous open-ended pin slot and a pin retainer portion, the retainer clip configured for translation within the receiver portion relative to the longitudinal axis between: a locked position in which the pin occupies the bore and the continuous open-ended pin slot, and the pin retainer portion extends into the bore to engage the pin; and an unlocked position in which the pin retainer portion is laterally displaced from the pin to provide mechanical clearance for the removal of the mount body from the pin while the pin occupies the bore.

Example 33. The pin clip mount of Example 32, wherein the continuous open-ended pin slot is configured to permit the retainer clip to be laterally translated toward the unlocked position without interference from the pin.

Example 34. The pin clip mount of Example 32 or Example 33, wherein the retainer clip is a unitary metal clip formed from a single continuous piece of sheet metal.

Example 35. The pin clip mount of any of Examples 32-34, wherein the lateral displacement of the retainer clip between the locked position and the unlocked position comprises linear translation.

### Construction

Unless context dictates otherwise, use herein of the word "or" may be considered use of an "inclusive or," or a term that permits inclusion or application of one or more items that are linked by the word "or" (e.g., a phrase "A or B" may be interpreted as permitting just "A," as permitting just "B," or as permitting both "A" and "B"). Also, as used herein, a phrase referring to "at least one of" a list of items refers to any combination of those items, including single members. For instance, "at least one of a, b, or c" can cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c, or any other ordering of a, b, and c). Further, items represented in the accompanying figures and terms discussed herein may be indicative of one or more items or terms, and thus reference may be made interchangeably to single or plural forms of the items and terms in this written description.

Unless the context indicates otherwise, the use herein of the phrase "configured" describes a system, apparatus, or other structure constructed and/or specifically designed to perform a particular task or adopt a particular configuration.

In this description, ordinal numbers such as "first" and "second" are used only to distinguish between different described objects and have no limitation on a location, a sequence, a priority, a quantity, content, or the like of the described objects. For example, a "first object" is used as an example, and there may be one or more "objects." Additionally, objects modified by different ordinal numbers may be the same or different objects. For example, if the described object is an "object," a "first object" and a "second object" may be the same or different objects.

In aspects, the fastener devices may include one or more of the features of the fastener devices illustrated in the Drawings and described herein. Although implementations for fastener devices have been described in language specific to certain features and/or methods, the subject of the appended claims is not necessarily limited to the specific features or methods described. Rather, the specific features and methods are disclosed as example implementations of the fastener devices.

## Claims

1. A pin clip mount (200) configured to couple a first component (390) to a second component (302) via a pin (280) associated with the second component, the pin clip mount comprising:
a retainer clip (202) comprising:
a center portion (212);
a continuous open-ended pin slot (204); and
a pin retainer portion (218) configured to engage the pin; and
a mount body (240) comprising:
a sidewall (242) defining a bore (244) configured to receive a portion of the pin (280) along a longitudinal axis; and
a receiver portion (250) configured to receive the retainer clip, the receiver portion intersecting the bore such that the continuous open-ended pin slot at least partially aligns with the bore to permit the pin to pass through the retainer clip.

2. The pin clip mount of claim 1, wherein the retainer clip comprises a first bracket (220) and a second bracket (230) that extend from opposite ends of the center portion to define a U-shaped clip profile, in particular with the continuous open-ended pin slot (204) extending through the first bracket, the center portion, and the second bracket, wherein the retainer clip preferably is a unitary metal clip.

3. The pin clip mount of claim 1 or 2, wherein the continuous open-ended pin slot at least partially aligns with the bore to permit the pin to pass through the retainer clip when the retainer clip (202) is laterally translated within the receiver portion (250) into a locked position, the retainer clip (202) configured for lateral translation within the receiver portion (250) out of the locked position to disengage the pin retainer portion (218) from the pin (280) while the pin (280) occupies the bore (244).

4. The pin clip mount of claim 2 or 3, wherein the first bracket (220) terminates at a first distal end (424) and the second bracket (230) terminates at a second distal end (434), and wherein the continuous open-ended pin slot (204) extends through the first bracket, the center portion, and the second bracket to define an open end between the first distal end and the second distal end.

5. The pin clip mount of any one of claims 2 to 4, wherein the center portion (212) includes a first center portion (414) spaced apart from a second center portion (416), the first center portion (414) connects a first arm (426) of the first bracket (220) to a first arm (436) of the second bracket (230), the second center portion (416) connects a second arm (428) of the first bracket (220) to a second arm (438) of the second bracket (230), in particular with the continuous open-ended pin slot (204) being defined between the first center portion (414) and the second center portion (416), between the first and second arms of the first bracket, and between the first and second arms of the second bracket.

6. The pin clip mount of the preceding claim, wherein the first and second arms of the first bracket (220) connect at a first end portion (422) to form a U-shaped first bracket profile, wherein the first and second arms of the second bracket (230) connect at a second end portion (432) to form a U-shaped second bracket profile, and wherein the unitary metal clip (202) is configured such that a force applied to at least one of the first end portion (422) or the second end portion (432) disengages the pin retainer portion (218) from the pin (280).

7. The pin clip mount of any one of the preceding claims, wherein the continuous open-ended pin slot (204) is configured to receive the portion (282) of the pin (280) therethrough during an installation of the retainer clip (202) into the receiver portion (250) while the portion (282) of the pin (280) occupies the bore (244).

8. The pin clip mount of any one of the preceding claims2, wherein the retainer clip (202) is configured to be laterally translated within the receiver portion (250) between a locked position in which the pin retainer portion (218) engages the pin (280) to limit movement of the mount body (240) relative to the pin (280), and an unlocked position in which the pin retainer portion (218) disengages the pin (280) wherein preferably when the retainer clip (202) is in the unlocked position at least one of:
the pin (280) is removable from the bore (244) while the retainer clip (202) is in the receiver portion (250); or
the retainer clip (202) is removable from the receiver portion (250) while the pin (280) occupies the bore (244).

9. The pin clip mount of any one of claims 2 to 8, wherein the pin retainer portion (218) is defined on the second bracket (230), the pin retainer portion (218) configured to engage the pin (280) to inhibit withdrawal of the pin (280) from the bore (244)

10. The pin clip mount of claim 9, wherein the pin retainer portion comprises at least one cantilevered prong (362)(364), wherein the bore (244) defines a central longitudinal axis (A) and the at least one cantilevered prong (362)(364) extends toward the central longitudinal axis, and wherein the at least one cantilevered prong (362)(364) is configured to elastically deflect away from the central longitudinal axis in response to the pin (280) advancing through the bore (244), in particular with the at least one cantilevered prong (362, 364) comprising a straight-line contact edge (366, 368) configured to distribute an engagement force across a linear segment of the pin (280).

11. The pin clip mount of any one of the preceding claims, wherein the pin (280) is inserted into the bore (244) in an insertion direction (D1), and wherein the pin clip mount (200) is configured such that the pin (280) is retained within the bore (244) against movement in a retraction direction (D2) opposite the insertion direction by engagement of the pin retainer portion (218) with the pin (280).

12. The pin clip mount of any one of the preceding claims, wherein the retainer clip (202) further comprises a lock portion (206) configured to releasably fix the retainer clip within the receiver portion (250), in particular with the lock portion (206) comprising at least one locking flange (408)(410) that extends from at least one of the first bracket (220) or the second bracket (230).

13. The pin clip mount of claim 12, wherein the at least one locking flange (408)(410) extends from the first bracket (220) and/or the mount body (240) defines at least one groove (552) within the receiver portion (250) configured to receive the at least one locking flange (410), the locking flange configured for retention within the groove to fix the unitary metal clip (202) in a locked position in the receiver portion (250).

14. The pin clip mount of any one of claims 2 to 13, wherein the continuous open-ended pin slot (204) at the second bracket (230) defines a stopper notch (448), wherein the stopper notch (448) is defined between a first flange (466) and a second flange (468) that extend from the second bracket (230), and wherein the receiver portion (250) includes a stopper (354) configured for receipt into the stopper notch (448) to limit translation of the unitary metal clip (202) within the receiver portion (250).

15. The pin clip mount of any one of the preceding claims, wherein a first end of the bore (244) terminates at an opening (546) configured to receive the pin (280) therethrough, and wherein the receiver portion (250) defines a channel (756) that intersects the bore (244).
